## Europäisches Patentamt
## European Patent Office
## Office européen des brevets

(11) Veröffentlichungsnummer: **0 154 791**
**A1**

(12) **EUROPÄISCHE PATENTANMELDUNG**

(21) Anmeldenummer: **85100944.9**

(22) Anmeldetag: **30.01.85**

(51) Int. Cl.⁴: **F 28 D 20/00**

(30) Priorität: **09.02.84 CH 612/84**

(43) Veröffentlichungstag der Anmeldung: **18.09.85**
**Patentblatt 85/38**

(84) Benannte Vertragsstaaten: **DE FR NL**

(71) Anmelder: **GEBRÜDER SULZER AKTIENGESELLSCHAFT, Zürcherstrasse 9, CH-8401 Winterthur (CH)**

(72) Erfinder: **Huber, Rudolf, Möttelistrasse 61, CH-8400 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Mit Wasser gefüllter Wärmespeicher für eine Raumheizungsanlage.**

(57) Bei dem, durch einen Zwischenboden (2) in zwei getrennte Wasserräume (3 und 4) geteilten Speicher wird das vom Kondensator einer Wärmepumpe aufgewärmte Wasser in eine im Trennbereich liegende Innenkammer (14) eingespeist, von der je ein Wasseraustrittsrohr (15 und 16) in den Deckenbereich des oberen bzw. unteren Wasserraumes (3 bzw. 4) führt.

Der neue Speicher kann im bivalenten oder im monovalenten Betrieb, bei denen der Kessel im Betrieb steht, mit seinem oberen Wasserraum (3) als Speicher für kesselbeheiztes Wasser dienen. Die Art der Zuführung des wärmepumpenerwärmten Wassers ermöglicht die Bildung und Aufrechterhaltung einer weitgehend ungestörten Temperaturschichtung.

P. 5863/Wg/IS

Gebrüder Sulzer, Aktiengesellschaft, Winterthur/Schweiz

Mit Wasser gefüllter Wärmespeicher für eine Raumheizungsanlage

Die Erfindung betrifft einen mit Wasser gefüllten Wärmespeicher für eine Raumheizungsanlage, die für die Zufuhr
der Heizwärme im monovalenten oder bivalenten Heizbetrieb
mindestens einen oel- oder gasbefeuerten Kessel und eine
Wärmepumpe enthält, welcher Speicher horizontal in zwei
vertikal übereinander liegende, im wesentlichen getrennte,
jedoch miteinander kommunizierende Wasserräume unterschiedlicher mittlerer Temperatur geteilt ist, wobei aus
dem Bereich der Teilung eine mit dem oberen Wasserraum
des Speichers in Strömungsverbindung stehende Kessel-Rücklaufleitung in den Kessel führt, aus dem eine Vorlaufleitung für aufgeheiztes Wasser oben in den Speicher mündet,
wobei ferner im Bodenbereich eine zum Kondensator der Wärmepumpe führende Entnahmeleitung für abgekühltes Wasser vorhanden ist.

Ein Wärmespeicher der vorstehend genannten Art ist beispielsweise aus EP-B-O OO1 419 bekannt; dieser Speicher,
in dem im oberen Wasserraum eine Brauchwasseraufbereitung
und im unteren Wasserraum eine Brauchwasservorwärmung
stattfindet, kann als Speicher für durch die Wärmepumpe
erwärmtes "Heizungswasser" dienen, hat jedoch keine
Speichermöglichkeit für kesselbeheiztes Wasser.

Raumheizungsanlagen mit derartigen Speichern entnehmen im
monovalenten Betrieb - d.h. bei Aussentemperaturen, bei denen die Wärmepumpe nicht oder nur unwirtschaftlich arbeiten kann (z.B. bei Vereisungsgefahr des Verdampfers) oder bei denen die Heizleistung der Wärmepumpe für die Deckung des Heizbedarfs ausreicht - ihre Heizwärme dem Kessel oder der Wärmepumpe. Im sogenannten bivalenten Betrieb deckt die Wärmepumpe einen Teil des Heizbedarfs, während der Kessel den Rest der von der Wärmepumpe nicht mehr aufgebracht werden kann, übernimmt. In solchen Anlagen hat der Wärmespeicher die Aufgabe, als Puffer zu wirken, um die Ein-/Ausschalt-Häufigkeit für die Wärmepumpe und/oder für die Kesselfeuerung möglichst niedrig zu halten.

Mit anderen Worten sollen die Laufzeiten der Wärmepumpe und Kesselfeuerung nach erfolgter Einschaltung möglichst lang sein. Es ist daher erforderlich, sowohl für die von der Kesselfeuerung als auch für die von der Wärmepumpe erzeugte Energie ein Speichervolumen vorzusehen. Dabei ist jedoch darauf zu achten, dass die Wärmeverluste des Speichers gegen die Umgebung nicht unwirtschaftlich gross werden.

Da die Schaltvorgänge für ein Aufladen des Speichers im allgemeinen von Temperaturfühlern gesteuert werden, ist es weiterhin erforderlich, dass das im Speicher gespeicherte Wasser soweit wie möglich in Schichten mit von unten nach oben steigender Temperatur "gelagert" ist, ohne dass in dieser Schichtung - beispielsweise durch turbulente Strömungsvorgänge - grössere Störungen vorhanden sind. Aufgabe der Erfindung ist es, einen Wärmespeicher zu schaffen, der - neben einer Speicherung des wärmepumpenerwärmten Wassers - auch eine Speicherung für kesselbeheiztes Wasser

0154791

ohne unwirtschaftlich grosse Wärmeverluste ermöglicht, und bei dem zum zweiten die erwähnte Ausbildung und Aufrechterhaltung der Schichten gewährleistet ist. Erfindungsgemäss wird diese Aufgabe dadurch gelöst, dass die im Kondensator der Wärmepumpe aufgewärmtes Wasser führende Leitung im Bereich der Teilung in eine Kammer im Innern des Speichers mündet, von der aus je ein Wasseraustrittsrohr in den Deckenbereich des oberen und des unteren Wasserraumes führt.

Die erfindungsgemässe Zuführung von wärmepumpenerwärmtem Wasser ermöglicht zum einen bei bivalentem Betrieb - und bei monovalemtem Kesselbetrieb -, den oberen Wasserraum als Speichervolumen für kesselbeheiztes Wasser zu nutzen; die konstruktive Ausbildung der Wasserrohre ermöglicht es, das wärmepumpenbeheizte Wasser möglichst störungsfrei in den oberen bzw. unteren Wasserraum des Speichers einzubringen.

Vorteilhaft ist es, wenn eine Leitung für den Heizungsvorlauf an die Decke des oberen Wasserraumes und eine Leitung für den Heizungsrücklauf an den Bodenbereich des unteren Wasserraumes des Speichers angeschlossen sind; denn dadurch ist - in Verbindung mit dem zum Deckenbereich des oberen Wasserraumes führenden Wasseraustrittsrohr - eine Nutzung des ganzen Speichervolumens im monovalenten Wärmepumpenbetrieb möglich.

Die durch die Konstruktion der Wasseraustrittsrohre gewährleistete Bildung und Aufrechterhaltung einer möglichst ungestörten Schichtung lässt sich noch verbessern, wenn die Leitung für den Heizungsrücklauf und die Entnahmeleitung für abgekühltes Wasser gemeinsam an eine Haube angeschlossen sind und/oder wenn das nach unten führende Wasseraustrittsrohr über einen syphonartigen Anschluss in den Deckenbereich des unteren Wasserraumes mündet.

Die Wärmepumpe nutzt im allgemeinen Wärmequellen, deren
Energie - Niedrigtemperatur-Wärme oder Abfallenergie -
nicht sehr hochwertig ist; es ist daher zweckmässig, die
Wärmepumpe auch im bivalenten Betrieb bis zur Grenze ihrer
Heizmöglichkeiten zu nutzen, ehe der Restbedarf an Wärme
durch den Kessel aufgebracht wird, der im allgemeinen
mit hochwertiger Energie gespeist wird. Eine solche
praktisch restlose Nutzung der Wärmepumpe im bivalenten
Betrieb ist möglich, wenn aus dem Deckenbereich des unteren
Wasserraumes zusätzlich eine Beimischleitung aus dem
Speicher in ein Mischventil in der Leitung für den Heizungsvorlauf führt. Auf diese Weise erfolgt die bei Heizungsanlagen übliche Rücklaufbeimischung nicht mit dem abgekühlten Heizungsrücklauf direkt, sondern erst nachdem dieser
im unteren Wasserraum des Speichers durch die Wärmepumpe
soweit wie möglich aufgewärmt worden ist. Entsprechend
verringert sich die zusätzlich dem oberen Wasserraum
als Kesselspeicher zu entnehmenden Wärme- bzw. Wassermenge.

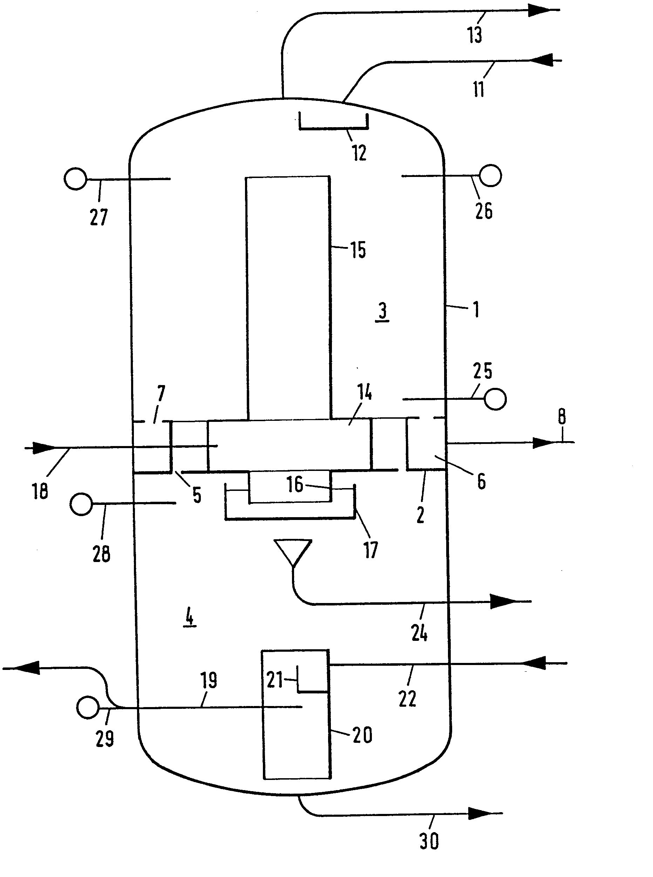

Im folgenden wird die Erfindung anhand eines Ausführungsbeispiels im Zusammenhang mit der Zeichnung näher erläutert.

Die einzige Figur zeigt in schematischer Darstellung eine
Ausführungsform des neuen Speichers.

Das Gefäss 1 des neuen Wärmespeichers ist durch einen etwa
in der Mitte seiner vertikalen Abmessung liegenden Zwischenboden 2 in einen oberen Wasserraum 3 und einen unteren
Wasserraum 4 getrennt. Durch einen Ringspalt 5 im Boden 2 kommunizieren beide Wasserräume 3 und 4 miteinander, ohne dass sich ihre Inhalte mischen. Im oberen Wasserraum 3 herrscht während allen Betriebsarten eine höhere mittlere Wassertemperatur als im unteren Wasserraum 4. Auf dem Zwischenboden 2 wird im Bodenbereich des oberen Wasserraums 3 eine ringförmige Kammer 6 gebildet, die nach oben weitgehend geschlossen ist; sie weist jedoch über ihren ganzen Umfang verteilt Strömungsöffnungen oder eine Ring-öffnung 7/auf, durch die aus dem oberen Wasserraum 3 Wasser in die Kammer 6 nachströmen kann, wenn solches über eine Kessel-Rücklaufleitung 8 dem nicht dargestellten Kessel der zugehörigen Raumheizungsanlage zufliesst.

Vom im allgemeinen oel- oder gasbefeuerten Kessel führt eine Kesselvorlaufleitung 11 zurück in den Speicher und mündet in den Deckenbereich des oberen Wasserraumes 3, wobei ein Ueberlauf 12 vor der Einmündung der Leitung 11 eine horizontale Verteilung und eine vertikale Schichtung des Wassers ermöglicht. Am höchstens Punkt des Deckenbereichs verlässt eine Vorlaufleitung 13 der Heizungsanlage den Speicher.

Erfindungsgemäss ist innerhalb der Ringkammer 6 auf dem Zwischenboden 2 eine weitere Kammer 14 vorgesehen, von der nach oben ein Wasseraustrittsrohr 15 in den Deckenbereich des oberen Wasserraumes 3 führt, während ein gleichartiges, nach unten gerichtetes Wasserrohr 16 syphonartig in einen Behälter 17 eintaucht und in den Deckenbereich des unteren Wasserraumes 4 hineinragt. In die Innenkammer 14 mündet eine Leitung 18, die vom Kondensator einer Wärmepumpe kommt und der Kammer 14 in diesem Kondensator aufgewärmtes Wasser zuführt.

Das im Kondensator aufzuwärmende, abgekühlte Wasser wird mittels einer Pumpe dem Bodenbereich des unteren Wasserraumes über eine Entnahmeleitung 19 entzogen, die von einer Entnahmehaube 20 ausgeht; in diese Haube 20, in der eine Schikane 21 vorgesehen sein kann, führt auch eine Heizungs-Rücklaufleitung 22, durch die der Rücklauf der nicht dargestellten Raumheizungsanlage in den Speicher geleitet wird.

Vom Deckenbereich des unteren Wasserraumes 4 geht eine weitere Leitung, die Beimischleitung 24, aus, die zu einem Umschaltorgan in der konventionellen Rücklauf-Beimischleitung der Heizungsanlage führt. Mit der Beimischleitung 24 ist es möglich, während des bivalenten Betriebs dem Heizungsvorlauf über das übliche Mischventil in der Leitung 13 als Beimischung nicht den kalten Heizungsrücklauf direkt beizumischen, sondern diesen zuvor im unteren Wasserraum 4 des Speichers durch die Wärmepumpe auf die mit ihr erreichbare Temperatur vorzuwärmen.

Im oberen Wasserraum 3, der im bivalenten oder im monovalenten "Kessel"-Betrieb als Speicher für das im Kessel aufgeheizte Wasser dient, sind nahe dem Boden und nahe seiner Decke Temperaturfühler 25 und 26 vorgesehen; der obere Temperaturfühler 26 gibt bei Unterschreiten einer bestimmten Temperatur ein Einschaltsignal für die Kesselfeuerung und die nicht gezeigte Pumpe in dem Kesselkreislauf, der aus Kesselrücklaufleitung 8, dem Kessel und der Kesselvorlaufleitung 11 besteht. In gleicher Weise bewirkt der untere Temperaturfühler 25 bei Erreichen einer eingestellten Höchsttemperatur ein Abschalten der genannten Pumpe und der Feuerung.

0154791

Für die Steuerung der Wärmepumpe sind im Deckenbereich des oberen und des unteren Wasserraumes 3 bzw. 4 je ein, an ein von der Aussentemperatur beeinflusstes Umschaltorgan angeschlossener Temperaturfühler 27 und 28 für das Einschalten der Wärmepumpe und ihres Kondensatorkreislaufs, bestehend aus der Entnahmeleitung 19, dem nicht gezeigten Kondensator der Wärmepumpe und der Einspeiseleitung 18. Der obere Fühler 27 veranlasst dieses Einschaltsignal für die Wärmepumpe im monovalenten Wärmepumpenbetrieb, bei dem der ganze Speicher ausschliesslich von der Wärmepumpe beheizt wird, während der untere Temperaturfühler 28 die Wärmepumpe im bivalenten Betrieb steuert, bei dem nur der untere Wasserraum 4 als Speichervolumen für das wärmepumpenbeheizte Wasser verwendet wird und der obere Wasserraum 3 die Funktion eines Kesselspeichers übernimmt.

Eine Abschaltung der Wärmepumpe wird bei beiden Betriebsarten durch einen Temperaturfühler 29 ausgelöst, der im Bodenbereich des unteren Wasserraumes 4 bzw. in der Entnahmeleitung 19, die abgekühltes Wasser zum Kondensator der Wärmepumpe führt, angeordnet ist.

Im tiefsten Punkt des Speichers schliesslich ist eine Entleerungsleitung 30 angeschlossen.

Patentansprüche
_____

1. Mit Wasser gefüllter Wärmespeicher für eine Raumheizungsanlage, die für die Zufuhr der Heizwärme im monovalenten oder bivalenten Heizbetrieb mindestens einen oel- oder gasbefeuerten Kessel und eine Wärmepumpe enthält, welcher Speicher horizontal in zwei vertikal übereinander liegende, im wesentlichen getrennte, jedoch miteinander kommunizierende Wasserräume unterschiedlicher mittlerer Temperatur geteilt ist, wobei aus dem Bereich der Teilung eine mit dem oberen Wasserraum des Speichers in Strömungsverbindung stehende Kessel-Rücklaufleitung in den Kessel führt, aus dem eine Vorlaufleitung für aufgeheiztes Wasser oben in den Speicher mündet, wobei ferner im Bodenbereich eine zum Kondensator der Wärmepumpe führende Entnahmeleitung für abgekühltes Wasser vorhanden ist, dadurch gekennzeichnet, dass die im Kondensator der Wärmepumpe aufgewärmtes Wasser führende Leitung (18) im Bereich der Teilung in eine Kammer (14) im Innern des Speichers mündet, von der aus je ein Wasseraustrittsrohr (15, 16) in den Deckenbereich des oberen und des unteren Wasserraumes (3, 4) führt.

2. Wärmespeicher nach Anspruch 1, dadurch gekennzeichnet, dass aus dem Deckenbereich des unteren Wasserraumes (4) zusätzlich eine Beimischleitung (24) aus dem Speicher in ein Mischventil in der Leitung (13) für den Heizungsvorlauf führt.

3. Wärmespeicher nach Anspruch 1, dadurch gekennzeichnet, dass eine Leitung (22) für den Heizungsrücklauf und die Entnahmeleitung (19) für abgekühltes Wasser gemeinsam an eine Haube (20) angeschlossen sind.

4. Wärmespeicher nach Anspruch 1, dadurch gekennzeichnet, dass das nach unten führende Wasseraustrittsrohr (16) über einen syphonartigen Anschluss (17) in den Deckenbereich des unteren Wasserraumes (4) mündet.

5. Wärmespeicher nach Anspruch 1, dadurch gekennzeichnet, dass im Deckenbereich des oberen und des unteren Wasserraumes (3, 4) je ein Temperaturfühler (27, 28) vorgesehen ist, die, von einem aussentemperaturgesteuerten Auswahlorgan ausgewählt, wahlweise die Inbetriebsetzung der Wärmepumpe bewirken.

6. Wärmespeicher nach Anspruch 1, dadurch gekennzeichnet, dass die Kessel-Rücklaufleitung (8) im Trennbereich des Speichers aus einem Ringraum (6) abzweigt, der über eine Anzahl auf seinem Umfang verteilten Oeffnungen oder eine Ringöffnung (7) mit dem oberen Wasserraum (3) verbunden ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 001 419  (SULZER) | | F 28 D  20/00 |
| | --- | | |
| A | FR-A-2 366 520  (HORWITZ) <br> * Insgesamt * | 1 | |
| | ----- | | |

| | |
|---|---|
| | **RECHERCHIERTE SACHGEBIETE (Int. Cl.4)** |
| | F 24 D <br> F 24 H <br> F 28 D |

Der vorliegende Recherchenbericht wurde für alle Patentansprüche erstellt.

| Recherchenort <br> DEN HAAG | Abschlußdatum der Recherche <br> 14-05-1985 | Prüfer <br> VAN GESTEL H.M. |
|---|---|---|

EPA Form 1503. 03.82